(19) Europäisches Patentamt
European Patent Office
Office européen des brevets

(11) EP 0 816 409 A1

(12) **EUROPÄISCHE PATENTANMELDUNG**

(43) Veröffentlichungstag:
**07.01.1998 Patentblatt 1998/02**

(51) Int. Cl.[6]: **C08G 18/38**, C08G 18/10, C08G 18/67, C09D 175/04

(21) Anmeldenummer: **97109549.2**

(22) Anmeldetag: **12.06.1997**

(84) Benannte Vertragsstaaten:
**AT BE CH DE DK ES FI FR GB GR IE IT LI LU MC NL PT SE**

(30) Priorität: **03.07.1996 DE 19626567**

(71) Anmelder:
**BASF AKTIENGESELLSCHAFT**
**67056 Ludwigshafen (DE)**

(72) Erfinder:
- **Weingart, Franz, Dr.**
  **69181 Leimen (DE)**
- **Burkhardt, Uwe**
  **67468 Frankenstein (DE)**
- **Bauer, Stephan, Dr.**
  **67126 Hochdorf-Assenheim (DE)**
- **Reich, Wolfgang, Dr.**
  **67133 Maxdorf (DE)**
- **Kohl, Albert**
  **67229 Laumersheim (DE)**

# (54) Polyurethane

(57) Polyurethane I, erhältlich durch Umsetzung von

1) einem Isocyanat II, ausgewählt aus der Gruppe der

a) Präpolymeren, erhältlich durch Umsetzung von

a1) einem mehrwertigen Alkohol III, der pro Molekül von III mehr als eine gegenüber Isocyanaten reaktive Hydroxylgruppe aufweist,
mit

a2) einem aromatischen oder aliphatischen, mehrwertigen Isocyanat IV,
wobei das Verhältnis der Zahl der gegenüber Isocyanaten reaktiven Hydroxylgruppen von III zu der Zahl der Isocyanatgruppen in IV kleiner als 1 ist,
und

b) aromatischen oder aliphatischen, mehrwertigen Isocyanate IV

mit

2) einer als Kettenverlängerer geeigneten Verbindung V, erhältlich durch

a) Umsetzung von einem mehrwertigen Alkohol VI
mit

b1) einer Verbindung VII, die eine Epoxyfunktion und zusätzlich eine gegenüber Alkoholen reaktive funktionelle Gruppe enthält, zu einer Verbindung VIII und Umsetzung einer Verbindung VIII mit einer α,β-olefinisch ungesättigten Carbonsäure IX zu einer Verbindung X
oder

b2) einer α,β-olefinisch ungesättigten Carbonsäure IX zu einer Verbindung X
und

c) Umsetzung einer Verbindung X mit einem Amin XI, das mindestens eine gegenüber der α,β-Mehrfachbindung von IX reaktive primäre Aminogruppe aufweist,

wobei die Summe der Zahl der gegenüber Isocyanatgruppen reaktiven Aminogruppen und Hydroxylgruppen der Verbindung V größer als die Zahl der Isocyanatgruppen der Verbindung II ist,

Die Polyurethane können als Bindemittel oder Bindemittelkomponente für pigmentfreie oder pigmenthaltige Beschichtungen verwendet werden.



Printed by Xerox (UK) Business Services
2.15.7/3.4

## Beschreibung

Die vorliegende Erfindung betrifft Polyurethane, ein Verfahren zur Herstellung der Polyurethane, ihre Verwendung als Bindemittel oder Bindemittelkomponente für Beschichtungen, sowie neue Bindemittelsysteme und solche Bindemittelsysteme enthaltende beschichtete Gegenstände.

Wäßrige und organische Lösungen von Polymeren, die ein Pigment enthalten können, finden vielfache Anwendung zur Herstellung von farblosen oder farbigen Lacken und Beschichtungen (Ullmann's Encyclopedia of Industrial Chemistry, 5. Ed., Vol. A18, S. 362-368, VCH Publishers Inc., Weinheim-New York, 1991).

Zur Herstellung der Lacke werden diese Lösungen oder Suspensionen auf einen Untergrund oder ein Trägermaterial aufgetragen. Nach dem Entfernen des Lösungsmittels trocknet das Polymere physikalisch und/oder härtet chemisch durch Vernetzung.

Als Polymere für solche Lacke eignen sich bekanntermaßen Polyurethane, die mit Polyisocyanaten vernetzt werden, um einen klebfreien Film mit der gewünschten Härte und Unlöslichkeit der Beschichtung in Lösemitteln zu erzielen.

Derartige Polymere weisen aber den Nachteil auf, daß sie verhältnismäßig langsam härten. Das hat zur Folge, daß der Lackfilm unmittelbar nach der Beschichtung und dem Entfernen des Lösemittels noch nicht klebfrei und ausgehärtet ist. Ferner sind die Endhärte des Bindemittels und die Abriebfestigkeit oft unzureichend.

Der Erfindung lagen als Beschichtungsmittel geeignete Polymere als Aufgabe zugrunde, die die genannten Probleme auf technisch einfache Weise lösen.

Demgemäß wurden Polyurethane I,
erhältlich durch Umsetzung von

1) einem Isocyanat II, ausgewählt aus der Gruppe der

a) Präpolymeren, erhältlich durch Umsetzung von

a1) einem mehrwertigen Alkohol III, der pro Molekül von III mehr als eine gegenüber Isocyanaten reaktive Hydroxylgruppe aufweist,
mit

a2) einem aromatischen oder aliphatischen, mehrwertigen Isocyanat IV,
wobei das Verhältnis der Zahl der gegenüber Isocyanaten reaktiven Hydroxylgruppen von III zu der Zahl der Isocyanatgruppen in IV kleiner als 1 ist,
und

b) aromatischen oder aliphatischen, mehrwertigen Isocyanate IV

mit
2) einer als Kettenverlängerer geeigneten Verbindung V, erhältlich durch

a) Umsetzung von einem mehrwertigen Alkohol VI
mit

b1) einer Verbindung VII, die eine Epoxyfunktion und zusätzlich eine gegenüber Alkoholen reaktive funktionelle Gruppe enthält, zu einer Verbindung VIII und Umsetzung einer Verbindung VIII mit einer $\alpha,\beta$-olefinisch ungesättigten Carbonsäure IX zu einer Verbindung X
oder

b2) einer $\alpha,\beta$-olefinisch ungesättigten Carbonsäure IX zu einer Verbindung X
und

c) Umsetzung einer Verbindung X mit einem Amin XI, das mindestens eine gegenüber der $\alpha,\beta$-Mehrfachbindung von IX reaktive primäre Aminogruppe aufweist,

wobei die See der Zahl der gegenüber Isocyanatgruppen reaktiven Aminogruppen und Hydroxylgruppen der Verbindung V größer als die Zahl der Isocyanatgruppen der Verbindung II ist,

ein Verfahren zu ihrer Herstellung, ihre Verwendung als Beschichtungsmittel und Bindemittel für Beschichtungen, Pigmentzubereitungen und pigmenthaltige Beschichtungen, sowie neue Bindemittel, solche Bindemittel enthaltende Pigmentzubereitungen und beschichtete Gegenstände, die ein solches Bindemittelsystem enthalten, gefunden.

Geeignete Verbindungen III sind in erster Linie mehrwertige Alkohole vorzugsweise mit 2 bis 4, insbesondere 2 bis 3 Hydroxylgruppen pro Molekül und mittleren durchschnittlichen Molekulargewichten (Zahlenmittel) von 62 bis 5000. Besonders vorteilhaft sind hierbei funktionelle Gruppen enthaltende Polymere wie Polyesterole, Polyetherole, Polycarbonatdiole oder Polycaprolactondiole, die solchen Polymeren zugrunde liegenden monomeren Alkohole sowie Mischungen solcher Verbindungen.

Die Polyesterole sind zweckmäßigerweise überwiegend lineare Polymere mit endständigen OH-Gruppen, bevorzugt solche mit zwei oder drei, insbesondere zwei OH-Endgruppen. Die Säurezahl der Polyesterole ist kleiner als 10 und vorzugsweise kleiner als 3. Dis Polyesterole lassen sich in einfacher Weise durch Veresterung von aliphatischen oder aromatischen Dicarbonsäuren mit 4 bis 15 C-Atomen, vorzugsweise 4 bis 10 C-Atomen, mit Glycolen, bevorzugt Glycolen mit 2 bis 25 C-Atomen oder durch Polymerisation von Lactonen mit 3 bis 20 C-Atomen herstellen. Als Dicarbonsäuren lassen sich beispielsweise Glutarsäure, Pimelinsäure, Korksäure, Sebacinsäure, Dodecansäure und vorzugsweise Adipinsäure und Bernsteinsäure einsetzen. Geeignete aromatische Dicarbonsäuren sind Terephthalsäure, Isophthalsäure, Phthalsäure oder Mischungen aus diesen Dicarbonsäuren mit anderen Dicarbonsäuren, z.B. Diphensäure, Sebacinsäure, Bernsteinsäure und Adipinsäure. Die Dicarbonsäuren können einzeln oder als Gemische verwendet werden. Zur Herstellung der Polyesterole kann es gegebenenfalls vorteilhaft sein, anstelle der Dicarbonsäuren die entsprechenden Säurederivate, wie Carbonsäureanhydride oder Carbonsäurechloride zu verwenden. Beispiele für geeignete Glycole sind Diethylenglycol, 1,5-Pentandiol, 1,10-Decandiol und 2,2,4-Trimethylpentandiol-1,5. Vorzugsweise verwendet werden 1,2-Ethandiol, 1,3-Propandiol, 2-Methyl-1,3-propandiol,1,4-Butandiol, 1,6-Hexandiol, 2,2-Dimethylpropandiol-1,3, 1,4-Dimethylolcyclohexan, 1,4-Diethanolcyclohexan und ethoxylierte oder propoxylierte Produkte des 2,2-Bis-(4-hydroxyphenylen)-propan (Bisphenol A). Je nach den gewünschten Eigenschaften der Polyurethane I können die Polyole alleine oder als Mischung in verschiedenen Mengenverhältnissen verwendet werden. Als Lactone für die Herstellung der Polyesterole eignen sich z.B. $\alpha,\alpha$-Dimethyl-$\beta$-propiolacton, $\gamma$-Butyrolacton und vorzugsweise $\varepsilon$-Caprolacton.

Die Polyetherole sind im wesentlichen lineare, endständige Hydroxylgruppen aufweisende Substanzen, die Etherbindungen enthalten. Geeignete Polyetherole können leicht durch Polymerisation von cyclischen Ethern, wie Tetrahydrofuran, oder durch Umsetzung von einem oder mehreren Alkylenoxiden mit 2 bis 4 C-Atomen im Alkylenrest mit einem Startermolekül, das zwei aktive Wasserstoffatome im Alkylenrest gebunden enthält, hergestellt werden. Als Alkylenoxide seien beispielsweise Ethylenoxid, 1,2-Propylenoxid, Epichlorhydrin, 1,2-Butylenoxid, 2,3-Butylenoxid genannt. Die Alkylenoxide können einzeln, alternierend nacheinander oder als Mischung verwendet werden. Als Startermolekül kommen beispielsweise Wasser, Glycole wie Ethylenglycol, Propylenglycol, 1,4-Butandiol und 1,6-Hexandiol, Amine wie Ethylendiamin, Hexamethylendiamin und 4,4'-Diamino-diphenylmethan und Aminoalkohole wie Ethanolamin in Betracht. Geeignete Polyesterole und Polyetherole sowie deren Herstellung sind beispielswiese in EP-B 416 386, geeignete Polycarbonatdiole, vorzugsweise solche auf 1,6-Hexandiol-Basis, sowie deren Herstellung beispielsweise in US-A 4 131 731 beschrieben.

In Mengen bis zu 30 Gew.-% bezogen auf Gesamtmasse der Verbindung III können vorteilhaft aliphatische Diole mit 2 bis 20, vorzugsweise 2 bis 10 C-Atomen, wie 1,2-Ethandiol, 1,3-Propandiol, 1,4-Butandiol, 1,6-Hexandiol, 1,5-Pentandiol, 1,10-Decandiol, 2-Methyl-1,3-propandiol, 2,2-Dimethyl-1,3-propandiol, 2-Methyl-2-butyl-1,3-propandiol, 2,2-Dimethyl-1,4-butandiol, 1,4-Dimethylolcyclohexan, Hydroxypivalinsäureneopentylglykolester, Diethylenglykol, Triethylenglykol und Methyldiethanolamin oder aromatisch-aliphatische oder aromatisch-cycloaliphatische Diole mit 8 bis 30 C-Atomen, wobei als aromatische Strukturen heterocyclische Ringsysteme oder vorzugsweise isocyclische Ringsysteme wie Naphthalin- oder insbesondere Benzolderivate wie Bisphenol A, zweifach symmetrisch ethoxyliertes Bisphenol A, zweifach symmetrisch propoxyliertes Bisphenol A, höher ethoxylierte oder propoxylierte Bisphenol A-Derivate oder Bisphenol F-Derivate sowie Mischungen solcher Verbindungen in Betracht kommen, sowie Mischungen solcher Verbindungen.

In Mengen bis zu 5 Gew.-% bezogen auf Gesamtmasse der Verbindung III können vorteilhaft aliphatische Triole mit 3 bis 15, vorzugsweise 3 bis 10 C-Atomen, wie Trimethylolpropan oder Glycerin, das Reaktionsprodukt solcher Verbindungen mit Ethylenoxid und/oder Propylenoxid sowie Mischungen solcher Verbindungen in Betracht kommen.

Die Verbindungen II können funktionelle Gruppen, beispielsweise neutrale Gruppen wie Siloxangruppen, basische Gruppen wie insbesondere tertiäre Aminogruppen oder saure Gruppen oder deren Salze oder Gruppen, die leicht in saure Gruppen übergehen, tragen, die über einen mehrwertigen Alkohol III eingeführt werden. Vorzugsweise kann man Diolkomponenten, die solche Gruppen tragen, wie N-Methyldiethanolamin, N,N-Bis(Hydroxyethyl)aminomethylphosphonsäurediethylester oder N,N-Bis(hydroxyethyl)-2-aminoessigsäure-(3-sulfopropyl)ester oder Dicarbonsäuren, die solche Gruppen tragen und für die Herstellung von Polyesterolen verwendet werden können, wie 5-Sulfoisophthalsäure, verwenden.

Saure Gruppen sind besonders die Phosphorsäure-, Phosphonsäure-, Schwefelsäure-, Sulfonsäure-, Carboxyl-, oder Ammoniumgruppe.

Gruppen, die leicht in saure Gruppen übergehen, sind beispielsweise die Estergruppe oder Salze, vorzugsweise der Alkalimetalle wie Lithium, Natrium oder Kalium.

Als Verbindung IV kommen vorzugsweise Diisocyanate mit 6 bis 30 C-Atomen in Betracht. Vorteilhaft eingesetzt werden können aliphatische nichtcyclische Diisocyanate wie 1,5-Hexamethylendiisocyanat und 1,6-Hexamethylendiisocyanat, aliphatische cyclische Diisocyanate wie 1,4-Cyclohexylendiisocyanat, Dicyclohexylmethandiisocyanat und Isophorondiisocyanat der Formel

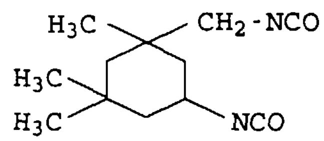

oder aromatische Diisocyanate wie Toluylen-2,4-diisocyanat, Toluylen-2,6-diisocyanat, m-Tetramethylxyloldiisocyanat, p-Tetramethylxyloldiisocyanat, 1,5-Tetrahydronaphthylendiisocyanat und 4,4'-Diphenylenmethandiisocyanat oder Mischungen solcher Verbindungen.

Die Mengen der Komponenten III und IV ist erfindungsgemäß so zu bemessen, daß das Verhältnis der Zahl der gegenüber Isocyanaten reaktiven Hydroxylgruppen von III zu der Zahl der Isocyanatgruppen von IV kleiner als 1 ist. Die Zahl der freien Hydroxylgruppen von III kann dabei nach DIN 53240 bestimmt werden.

Die Umsetzung zu den erfindungsgemäßen Präpolymeren kann in an sich bekannter Weise vorgenommen werden, wobei sich die Mitverwendung eines Katalysators, vorzugsweise eines tertiären Amins wie Triethylamin, Tributylamin, Diazabicyclo(2,2,2)octan, N-Methylpyridin oder N-Methylmorpholin empfiehlt. Weitere geeignete Katalysatoren sind metallorganische Verbindungen wie Dibutylzinndilaurat und Metallsalze wie Zinnoctoat, Bleioctoat oder Zinkstearat. Die Menge der Katalysatoren beträgt im allgemeinen 1 bis 500 Gew.-ppm der Gesamtmenge aller Einsatzstoffe III und IV.

Die Mitverwendung eines Lösungs- oder Verdünnungsmittels ist nicht erforderlich, wird aber bevorzugt.

Geeignete Lösungs- oder Verdünnungsmittel sind Kohlenwasserstoffe, insbesondere Toluol, Xylol oder Cyclohexan, Ester, insbesondere Ethylglykolacetat, Ethylacetat oder Butylacetat, Amide, insbesondere Dimethylformamid oder N-Methylpyrrolidon, Sulfoxide, insbesondere Dimethylsulfoxid, Ketone, insbesondere Methylethylketon oder Cyclohexanon, Ether, insbesondere Diisopropylether oder Methyl-tert.-butylether oder bevorzugt cyclische Ether, insbesondere Tetrahydrofuran oder Dioxan. Die Lösungsmittel oder Verdünnungsmittel können einzeln oder als Gemisch eingesetzt werden.

Die Reaktion wird in der Regel bei 20 bis 100°C, bevorzugt 50 bis 70°C durchgeführt, wodurch sich Reaktionszeiten von 2 bis 6 Stunden ergeben.

Das Präpolymer kann aus der Reaktionsmischung nach bekannten Methoden, z.B. durch Extraktion, Fällung oder Sprühtrocknung, isoliert oder vorteilhaft zur Herstellung der erfindungsgemäßen Polyurethane I eingesetzt werden.

Als Verbindungen VI kommen mehrwertige, insbesondere zweiwertige Alkohole in Betracht. Vorteilhaft eingesetzt werden können aliphatische Diole mit 2 bis 20, vorzugsweise 2 bis 10 C-Atomen, wie 1,2-Ethandiol, 1,3-Propandiol, 1,4-Butandiol, 1,6-Hexandiol, 1,5-Pentandiol, 1,10-Decandiol, 2-Methyl-1,3-propandiol, 2,2-Dimethyl-1,3-propandiol, 2-Methyl-2-butyl-1,3-propandiol, 2,2-Dimethyl-1,4-butandiol, 1,4-Cyclohexandimethanol, Hydroxypivalinsäureneopentylglykolester, Diethylenglykol, Triethylenglykol, Tetraethylenglykol, Dipropylenglykol und Methyldiethanolamin oder aromatisch-aliphatische oder aromatisch-cycloaliphatische Diole mit 8 bis 30 C-Atomen, wobei als aromatische Strukturen heterocyclische Ringsysteme oder vorzugsweise isocyclische Ringsysteme wie Naphthalin- oder insbesondere Benzolderivate wie Hydrochinon, 4,4'-Dihydroxybiphenyl, Bisphenol A, zweifach symmetrisch ethoxyliertes Bisphenol A, zweifach symmetrisch propoxyliertes Bisphenol A, höher ethoxylierte oder propoxylierte Bisphenol A-Derivate oder Bisphenol F-Derivate sowie Mischungen solcher Verbindungen in Betracht kommen, sowie Mischungen solcher Verbindungen.

Als mit den Hydroxylgruppen von VI reagierende Stoffe VII können viele Substanzklassen eingestzt werden, z.B. epoxidierte Olefine, Glycidylester von gesättigten oder ungesättigten Carbonsäuren, Glycidylether aliphatischer oder aromatischer Polyole oder Epoxyalkylhalogenide. Beispielsweise sind (+)-1-Chloro-2,3-epoxy-2-methyl-propan, (-)-1-Chloro-2,3-epoxy-2-methyl-propan, ()-1-Chloro-2,3-epoxy-2-methyl-propan, insbesondere (+)-1-Chloro-2,3-epoxy-propan, (-)-1-Chloro-2,3-epoxy-propan oder ()-1-Chloro-2,3-epoxy-propan sowie Mischungen solcher Verbindungen geeignet.

Die Umsetzung zu der erfindungsgemäßen Verbindung VIII kann in an sich bekannter Weise vorgenommen werden, wie beispielsweise in C.A.May, Epoxy Resins Chemistry and Technology, Marcel Dekker Inc., New York/Basel, 1988 beschrieben.

Derartige Verbindungen sind an sich bekannt. Besonders bevorzugt sind Polyglycidylverbindungen vom Bisphenol-A-Typ und Glycidylether mehrfunktioneller Alkohole, z.B. des Butandiols, des Hexandiols, des Neopentylglycols, des 1,4-Cyclohexandimethanols, des Glycerins und des Pentaerythrits, beispielsweise Epikote 812, Epikote 828 und Epikote 162 der Firma Shell oder Heloxy 68 und Heloxy 107 der Firma Rhône-Poulenc.

Die Verbindung VIII kann aus der Reaktionsmischung nach bekannten Methoden, z.B. durch Extraktion, Fällung oder Sprühtrocknung, isoliert oder vorteilhaft zur Herstellung der Verbindung X eingesetzt werden.

Als Verbindung IX kommen in erster Linie Carbonsäuren der Formel

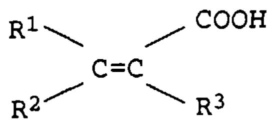

in Betracht, in der $R^1$, $R^2$ und $R^3$ Wasserstoff oder $C_1$-$C_4$-Alkylreste darstellen, wobei Acrylsäure und Methacrylsäure bevorzugt sind. Es können auch Gemische verschiedener solcher Carbonsäuren eingesetzt werden.

Die Umsetzung von VI, VIII oder Mischungen von VI und VIII zu der erfindungsgemäßen Verbindung X kann in an sich bekannter Weise vorgenommen werden, vorzugsweise bei 90 bis 130°C, besonders bevorzugt 100 bis 110°C und vorteilhaft so lange, bis das Reaktionsgemisch eine Säurezahl unter 5 mg KOH/g aufweist.

Als Katalysatoren für die Umsetzung einer Verbindung VIII mit einer Verbindung IX können z.B. KOH, quartäre Ammonium- oder Phosphoniumverbindungen, tertiäre Amine, Phosphine wie Triphenylphosphin oder Lewisbasen wie Thiodiglycol eingesetzt werden.

Die Katalysatoren werden bevorzugt in Mengen von 0,01 bis 5, besonders bevorzugt von 0,1 bis 3 Gew.-%, bezogen auf die Verbindung VIII, verwendet.

Die Mitverwendung eines Lösungs- oder Verdünnungsmittels ist nicht erforderlich, wird aber bevorzugt. Geeignete Lösungs- oder Verdünnungsmittel sind Kohlenwasserstoffe, insbesondere Toluol, Xylol oder Cyclohexan, Ester, insbesondere Ethylglykolacetat, Ethylacetat oder Butylacetat, Amide, insbesondere Dimethylformamid oder N-Methylpyrrolidon, Sulfoxide, insbesondere Dimethylsulfoxid, Ketone, insbesondere Methylethylketon oder Cyclohexanon, Ether, insbesondere Diisopropylether oder Methyl-tert.-butylether oder bevorzugt cyclische Ether, insbesondere Tetrahydrofuran oder Dioxan. Die Lösungsmittel oder Verdünnungsmittel können einzeln oder als Gemisch eingesetzt werden.

Zur Vermeidung einer vorzeitigen Polymerisation wird die Umsetzung insbesondere mit Acrylsäure oder Methacrylsäure zweckmäßigerweise in Gegenwart geringer Mengen von Inhibitoren durchgeführt. Dabei kommen die üblichen, zur Verhinderung einer thermischen Polymerisation verwendeten Verbindungen, z.B. vom Typ des Hydrochinons, der Hydrochinonmonoalkylether, des 2,6-Di-tert.-butyl-phenols, der N-Nitrosamine der Phenothiazine oder der Phosporigsäureester in Betracht. Sie werden im allgemeinen in Mengen von 0,005 bis 0,5 Gew.-%, bezogen auf die Verbindung IX, eingesetzt.

Im allgemeinen wird die Verbindung VIII für die Umsetzung vorgelegt und die Komponente IX zugegeben.

Die Verbindung X kann aus der Reaktionsmischung nach bekannten Methoden, z.B. durch Extraktion, Fällung oder Sprühtrocknung, isoliert oder vorteilhaft zur Herstellung der Verbindung V eingesetzt werden.

Geeignete Verbindungen XI mit mindestens einer primären Aminofunktion sind Amine mit 2 bis 20, vorzugsweise 2 bis 12 C-Atomen, wie Ethylamin, n-Propylamin, i-Propylamin, n-Butylamin, sek.-Butylamin, tert.-Butylamin, 1-Aminoisobutan, substituierte Amine mit 2 bis 20 C-Atomen, wie mehrwertige Amine, insbesondere 2-(N,N-Dimethylamino)-1-aminoethan, wie Aminomercaptane, insbesondere 1-Amino-2-mercaptoethan, vorteilhaft aliphatische Aminoalkohole mit 2 bis 20, vorzugsweise 2 bis 12 C-Atomen, wie Ethanolamin, 1-Amino-3,3-dimethyl-pentan-5-ol, 2-Aminoethyl-2',2"-diethanol-amin, 1-Amino-2,5-dimethyl-cyclohexan-4-ol, 2-Aminopropanol, 2-Aminobutanol, 3-Aminopropanol, 1-Amino-2-propanol, 2-Amino-2-methyl-1-propanol, 5-Aminopentanol, 3-Aminomethyl-3,5,5-trimethylcyclohexanol, 1-Amino-1-cyclopentanmethanol oder 2-Amino-2-ethyl-1,3-propandiol oder aromatisch-aliphatische oder aromatisch-cycloaliphatische Aminoalkohole mit 6 bis 20 C-Atomen, wobei als aromatische Strukturen heterocyclische Ringsysteme oder vorzugsweise isocyclische Ringsysteme wie Naphthalin- oder insbesondere Benzolderivate wie 2-Aminobenzylalkohol, 3-(Hydroxymethyl)anilin, 2-Amino-3-phenyl-1-propanol, 2-Amino-1-phenylethanol, 2-Phenylglycinol oder 2-Amino-1-phenyl-1,3-propandiol sowie Mischungen solcher Verbindungen in Betracht kommen, sowie Mischungen solcher Verbindungen.

Die Umsetzung zu der erfindungsgemäßen Verbindung V kann in an sich bekannter Weise vorgenommen werden, wie beispielsweise in J. March, Adv. Org. Chem., 3. Ed., Wiley Interscience, New York, 1985, Seite 689ff oder Organikum, 16. Auflage, VEB Deutscher Verlag der Wissenschaft, Berlin, 1976, Seite 504f beschrieben.

Die Mitverwendung eines Lösungs- oder Verdünnungsmittels ist nicht erforderlich, wird aber bevorzugt. Geeignete Lösungs- oder Verdünnungsmittel sind Kohlenwasserstoffe, insbesondere Toluol, Xylol oder Cyclohexan, Ester, insbesondere Ethylglykolacetat, Ethylacetat oder Butylacetat, Amide, insbesondere Dimethylformamid oder N-Methylpyrrolidon, Sulfoxide, insbesondere Dimethylsulfoxid, Ether, insbesondere Diisopropylether oder Methyl-tert.-butylether oder

bevorzugt cyclische Ether, insbesondere Tetrahydrofuran oder Dioxan. Die Lösungsmittel oder Verdünnungsmittel können einzeln oder als Gemisch eingesetzt werden.

Die Verbidung XI wird für die Umsetzung vorgelegt und die Komponente X zugegeben.

Die Reaktion wird in der Regel bei 0 bis 100°C, bevorzugt 20 bis 80°C durchgeführt, wodurch sich Reaktionszeiten von 0,5 bis 8 Stunden ergeben.

Die Verbindung V kann aus der Reaktionsmischung nach bekannten Methoden, z.B. durch Extraktion, Fällung oder Sprühtrocknung, isoliert oder vorteilhaft zur Herstellung der Verbindung I eingesetzt werden.

Zur Herstellung der erfindungsgemäßen Polyurethane I wird das Umsetzungsprodukt V mit einer Verbindung II oder Gemischen solcher Verbindungen umgesetzt. Die Zahl der freien reaktiven Gruppen von V kann im Falle der Aminogruppen dabei nach DIN 53176 und im Falle der Hydroxylgruppen nach DIN 53240, die Zahl der Isocyanatgruppen von II nach DIN EN 1242 bestimmt werden.

Die Mengen der Komponenten II und V ist erfindungsgemäß so zu bemessen, daß das Verhältnis der Zahl der gegenüber Isocyanaten reaktiven Gruppen, insbesondere Aminogruppen und Hydroxylgruppen, von V zu der Zahl der Isocyanatgruppen von II größer als 1 ist.

Die Umsetzung einer Verbindung II mit einer Verbindung V zum erfindungsgemäßen Polyurethan I kann in an sich bekannter Weise vorgenommen werden, wobei sich die Mitverwendung eines Katalysators, vorzugsweise eines tertiären Amins wie Triethylamin, Tributylamin, Diazabicyclo(2,2,2)octan, N-Methylpyridin oder N-Methylmorpholin empfiehlt. Weitere geeignete Katalysatoren sind metallorganische Verbindungen wie Dibutylzinndilaurat und Metallsalze wie Zinnoctoat, Bleioctoat oder Zinkstearat. Die Menge der Katalysatoren beträgt im allgemeinen 1 bis 500 Gew.-ppm der Gesamtmenge aller Einsatzstoffe II und V.

Die Mitverwendung eines Lösungs- oder Verdünnungsmittels ist nicht erforderlich, wird aber bevorzugt. Geeignete Lösungs- oder Verdünnungsmittel sind Kohlenwasserstoffe, insbesondere Toluol, Xylol oder Cyolohexan, Ester, insbesondere Ethylglykolacetat, Ethylacetat oder Butylacetat, Amide, insbesondere Dimethylformamid oder N-Methylpyrrolidon, Sulfoxide, insbesondere Dimethylsulfoxid, Ether, insbesondere Diisopropylether oder Methyl-tert.-butylether oder bevorzugt cyclische Ether, insbesondere Tetrahydrofuran oder Dioxan. Die Lösungsmittel oder Verdünnungsmittel können einzeln oder als Gemisch eingesetzt werden.

Die Reaktion wird in der Regel bei 20 bis 100°C, bevorzugt 20 bis 60°C durchgeführt, wodurch sich Reaktionszeiten von 0,5 bis 5 Stunden ergeben.

Das Polyurethan I kann aus der Reaktionsmischung nach bekannten Methoden, z.B. durch Extraktion, Fällung oder Sprühtrocknung, isoliert oder vorteilhaft zur Herstellung der eingangs erwähnten Beschichtungen oder Pigmentzubereitungen eingesetzt werden.

Die polymeren Massen I können allein oder zusammen mit einer die Vernetzung der polymeren Massen I fördernden Verbindung als Beschichtungsmittel oder Bindemittel eingesetzt werden.

Werden die Polyurethane I als Bindemittel oder Bindemittelkomponente eingesetzt, sollten die Polyurethane I vorteilhaft ein Molekulargewicht (Gewichtsmittel) von 5000 bis 200000, vorzugsweise 15000 bis 100000 haben.

Als Vernetzungskomponente kommen vorzugsweise mehrwertige Isocyanate, insbesondere solche mit mehr als zwei NCO-Gruppen pro Molekül in Betracht, die ein Molekulargewicht (Zahlenmittel) von 500 bis 5000, vorzugsweise 500 bis 2000 aufweisen. Solche mehrwertigen Isocyanate können in an sich bekannter Weise durch Umsetzung von Hexamethylendiisocyanat, Isophorondiisocyanat oder vorzugsweise Toluylendiisocyanat mit einem Triol oder Diol, insbesondere Trimethylolpropan oder Diethylenglykol, oder durch Biuret- oder Isocyanuratbildung erhalten werden.

Die Menge des mehrwertigen Isocyanats sollte dabei vorteilhaft so bemessen werden, daß die Zahl der Isocyanatgruppen zur Zahl der nicht-phenolischen NCO-reaktiven Gruppen des Polyurethans I 0,1:1 bis 2,0:1, vorzugsweise 0,5:1 bis 1,5:1 beträgt.

Die Anzahl der Isocyanatgruppen des mehrwertigen Isocyanats kann dabei nach DIN EN 1242 bestimmt werden.

Die mehrwertigen Isocyanate könne alleine oder im Gemisch mit anderen Vernetzern eingesetzt werden.

Die polymeren Massen I und die Mischungen der polymeren Massen I mit einem Vernetzer können alleine oder im Gemisch mit mindestens einem weiteren Beschichtungsmittel oder Bindemittel als pigmentfreies oder pigmenthaltiges Beschichtungsmittel eingesetzt werden.

Für pigmenthaltige Beschichtungsmittel können Pigmentzubereitungen aus den Pigmenten und dem Polyurethan I hergestellt werden. Hierzu vermischt man zweckmäßigerwiese die Pigmente, insbesondere Farbpigmente mit den Polyurethanen I und gegebenenfalls Zusatzstoffen lösungsmittelfrei oder vorzugsweise in Gegenwart mindestens eines der obengenannten Verdünnungsmittel in an sich bekannter Weise.

Die Pigmentzubereitung kann aus dem Gemisch durch Entfernen des Verdünnungsmittels isoliert oder vorzugsweise ohne Isolierung zur Weiterverarbeitung eingesetzt werden.

Als weitere Beschichtungsmittel oder Bindemittel kommen Polyurethane, vorzugsweise Polyurethane mit funktionellen Gruppen wie Carboxyl, Sulfonat- oder Phosphonatgruppen, Polyacrylate, Polymethacrylate, Polyacrylamid, Polymere und Copolymere von Vinylmonomeren wie Polystyrol, Polyvinylchlorid, Polyvinylacetat, Polyvinylpropionat und Polyacrylnitril, cellulosehaltige Bindemittel wie Celluloseester, insbesondere Cellulosenitrate, Celluloseacetate,

Celluloseacetopropionat und Celluloseacetobutyrat, Phenoxyharze und Epoxyharze in Betracht, die in an sich bekannter Weise erhalten werden können.

Als Zusatzstoffe finden gegebenenfalls Dispergierhilfsmittel, wie höhere Fettsäuren, z.B. Stearinsäure, oder deren Salze, Füllstoffe, wie anorganische und organische Pigmente, z.B. Aluminiumoxid, Siliziumdioxid, Titandioxid, Ruß, Polyethylen, Polypropylen, Kreidungsinhibitoren, z.B. Antimonoxid oder thixotrope Substanzen, z.B. amorphe Kieselsäure, Anwendung.

Die Mischungen aus Pigmentzubereitung und gegebenenfalls mindestens einem weiteren Bindemittel, Zusatzstoffen oder Verdünnungsmittel dienen in üblicher Weise als Beschichtungsmittel. Dazu kann ein Polyurethan I, gegebenenfalls ein Pigment oder einer der obengenannten Zusatzstoffe oder Vernetzer, in einem Lösungsmittel oder Verdünnungsmittel gelöst oder dispergiert und in an sich bekannter Weise auf einer Unterlage oder ein Trägermaterial aufgetragen werden. Anschließend kann die weitere Verarbeitung wie üblich erfolgen, z.B. durch Entfernen des Verdünnungsmittels und, falls erforderlich, Aushärten des Polymeren.

Die Beschichtungsmittel können dabei die erfindungsgemäßen Polymeren I oder Pigmentzubereitungen mit den Polymeren I allein oder im Gemisch mit anderen Pigmenten, Pigmentzubereitungen oder Polymeren enthalten.

Geeignete Lösungsmittel oder Verdünnungsmittel sind im allgemeinen Wasser, Ether, wie Tetrahydrofuran oder Dioxan, Ketone wie Methylethylketon oder Cyclohexanon, Ester wie Ethylacetat oder Kohlenwasserstoffe wie Alkane oder Aromaten oder Mischungen solcher Verbindungen.

Beispiele

1) Herstellung Verbindung X

Zu 1 mol einer Verbindung VI oder VIII gemäß Tabelle 1 und geeigeneten Stabilisatoren wurde bei 100°C 5 g Dimethylbenzylamin and anschließend innerhalb von 40 min 2 mol einer Verbindung IX gegeben. Dann wurde 8 h bei 110°C gerührt.

Die Produkte sind in Tabelle 1 zusammengefaßt.

2) Herstellung Verbindung V

Zu einer Lösung von 2 mol einer Verbindung XI gemäß Tabelle 2 in der gleichen Gewichtsmenge Tetrahydrofuran (THF) wurde bei 25°C eine Lösung von 1 mol einer Verbindung X gemäß Tabelle 2 in der gleichen Gewichtsmenge THF innerhalb von 3 Stunden unter Rühren zugegeben.

Die Produkte sind in Tabelle 2 zusammengefaßt.

3) Herstellung Verbindung III

Die Zusammensetzung der polymeren Diole III sind in Tabelle 3 zusammengefaßt.

4) Herstellung Verbindungen II

Zu einer Lösung von 1 mol Edukt III gemäß Tabelle 4 in der gleichen Gewichtsmenge THF wurde bei 40°C Edukt IV gemäß Tabelle 4 innerhalb von 5 min zugegeben. Nach der Zugabe von 5 Tropfen Dibutylzinndilaurat (Desmorapid® Z, Firma Bayer AG) wurde die Mischung solange auf 60°C gehalten, bis der NCO-Gehalt auf den dem NCO-Überschuß entsprechenden Wert gefallen war.

Die Produkte sind in Tabelle 4 zusammengefaßt.

5) Herstellung Verbindung I

Zu der gemäß Tabelle 4 erhaltenen Lösung von Verbindung II gemäß Tabelle 5 wurde bei 40°C 267 mmol Verbindung V gemäß Tabelle 2 innerhalb von 5 min zugegeben und die Mischung solange auf 60°C gehalten, bis der NCO-Gehalt einen Wert von kleiner 0,05 % bezogen auf eingesetztes NCO erreicht hat.

Die Produkte sind in Tabelle 5 zusammengefaßt.

Vergleichsbeispiel Ip

Zu der gemäß Tabelle 4 erhaltenen Lösung von Verbindung IIa wurde bei 40°C 267 mmol ethoxyliertes Bisphenol A (Dianol 22, Firma Shell) gemäß Tabelle 6 innerhalb von 5 min zugegeben und die Mischung solange auf 60°C gehalten, bis der NCO-Gehalt einen Wert von kleiner 0,05 % bezogen auf eingesetztes NCO erreicht hat.

Die Produktdaten sind in Tabelle 6 zusammengefaßt.

Tabelle 1

| Herstellung Verbindungen X | | | |
|---|---|---|---|
| Edukt VI oder VIII | Edukt IX | Viskosität [Pa.s] | Produkt |
| 1,4-Butandiol | Acrylsäure | | Xa* |
| Bisphenol-A-diglycidether (Epikote® 828, Fa. Shell) | Acrylsäure | 7,4 | Xb |
| Cyclohexandimethanoldiglycidether (Heloxy® 107, Fa. Rhone-Poulenc) | Acrylsäure | 7,4 | Xc |
| Neopentylglykoldiglycidether (Grilonit® V51-47, Fa. Ems) | Acrylsäure | 2,2 | Xd |

* 1,4-Butandioldiacrylat (Laromer® BDDA [ Fa. BASF])

Tabelle 2

| Herstellung Verbindungen V | | |
|---|---|---|
| Edukt X | Edukt XI | Produkt |
| Xa | Ethanolamin | Va |
| Xb | Ethanolamin | Vb |
| Xc | Ethanolamin | Vc |
| Xd | Ethanolamin | Vd |
| Xb | 1-Amino-2-propanol | Ve |
| Xb | 2-Amino-1-butanol | Vf |
| Xb | 2-Amino-2-methyl-1-propanol | Vg |
| Xb | 2,2-Dimethyl-5-amino-1-pentanol | Vh |
| Xb | 3-Aminomethyl-3,5,5-trimethyl-1-hexanol | Vi |
| Xb | ω-Aminopropyl-di-(ω-hydroxyethyl)-amin | Vj |

Tabelle 3

| Verbindungen III | | | |
|---|---|---|---|
| Verbindung III | M bzw. $M_w$ [g/mol] | OH-Zahl [mgKOH/g] | Produkt |
| Polyesterol aus Adipinsäure/Isophthalsäure/-1,4-Dimethylolcyclohexan | 800 | 140 | IIIa |
| Polyesterol aus Adipinsäure/Isophthalsäure/-1,6-Hexandiol | 1000 | 120 | IIIb |
| Elastophen® 1010 (Fa. Elastogran) | 1000 | 120 | IIIc |
| Tegomer® DS 3117 (Fa. Goldschmidt) | 1370 | 82 | IIId |
| Hexandiol | 118 | 949 | IIIe |

Tabelle 4

| Herstellung Verbindungen II | | | | |
|---|---|---|---|---|
| Edukt III | Edukt IV | Molverhältnis Edukt IV / III | Produkt II | Feststoffgehalt [%] |
| IIIa | 4,4'-Diphenylenmethandiisocyanat | 1,2 | IIa | 50 |
| IIIb : IIIc 1 : 1 Gew./Gew. | 4,4'-Diphenylenmethandiisocyanat | 1,2 | IIb | 50 |
| IIIa : IIId : III e 10/ : 1 : 2 Gew./Gew. | 4,4'-Diphenylenmethandiisocyanat | 1,2 | IIc | 50 |
| IIIb | 4,4'-Diphenylenmethandiisocyanat | 1,2 | IId | 50 |
| IIIa | Isophorondiisocyanat | 1,2 | IIe | 50 |
| IIIa | 4,4'-Diphenylenmethandiisocyanat | 1,11 | IIf | 50 |
| IIIa | 4,4'-Diphenylenmethandiisocyanat | 1,05 | IIg | 50 |

Tabelle 5
Herstellung Verbindungen I

| Edukt II | Edukt V | Molverhältnis V / II | Mw (GPC) [g/mol] | Tg [°C] | OH–Zahl [mgKOH/g] | NH–Zahl [mgKOH/g] | Produkt I I | Feststoffgehalt [%] |
|---|---|---|---|---|---|---|---|---|
| IIf | Va | 1,5 | – | – | 32 | 5,4 | Ia | 20 |
| IIa | Va | 1,5 | – | – | 17 | 2,8 | Ib | 20 |
| IIf | Vb | 1,5 | – | 61 | 57 | 5,7 | Ic | 20 |
| IIa | Vh | 1,33 | 30800 | 70 | 45 | 5,6 | Id | 20 |
| IIa | Vj | 1,33 | – | – | 44 | 5,5 | Ie | 20 |
| IIf | Vi | 1,33 | 56500 | 81 | 45 | 5,7 | If | 20 |
| IIa | Vc | 1,33 | 23500 | 60 | 48 | 5,9 | Ig | 20 |
| IIa | Vd | 1,33 | 28000 | 58 | 47 | 5,9 | Ih | 20 |
| IIa | Ve | 1,33 | 28000 | 74 | 46 | 5,9 | Ii | 20 |
| IIb | Ve | 1,33 | 22300 | –4 | 40 | 5,0 | Ij | 20 |
| IIc | Ve | 1,33 | 24300 | 43 | 41 | 5,2 | Ik | 20 |
| IId | Ve | 1,33 | 30800 | 9 | 40 | 4,9 | Im | 20 |
| IIe | Ve | 1,33 | 27300 | 63 | 47 | 5,8 | In | 20 |
| IIa | Ve | 1,14 | 46200 | 75 | 23 | 2,9 | Io | 20 |

Tabelle 6

Herstellung von Vergleichspolyurethan Ip

| Edukt II | Edukt V | Molverhältnis | Mw (GPC) | Tg | OH-Zahl | NH-Zahl | Produkt I | Feststoffgehalt |
|---|---|---|---|---|---|---|---|---|
| | | V / II | [g/mol] | [°C] | [mgKOH/g] | [mgKOH/g] | I | [%] |
| IIa | Vk | 1,5 | 19000 | 68 | 32 | 0 | Ip | 20 |

Bestimmung von mechanischen Eigenschaften von Polymer I Herstellung der Klarlackfilme:

1) Unvernetzte Filme:

20 Gew.%ige Lösungen von Produkt I in THF wurden mit einem Handrakel, Spaltbreite 200 µm auf eine Polyethylenterephthalatfolie [50 µm] aufgetragen. Die Filme wurden 24 h bei 60°C getrocknet.

2) Vernetzte Filme:

20 Gew.%ige Lösungen von Produkt I in THF wurden mit dem Addukt aus Trimethylolpropan und Toluylendiisocyanat (Desmodur L®, Fa. Bayer) gemischt und mit einem Handrakel, Spaltbreite 200 µm, auf eine Polyethylenterephthalatfolie [50 µm] aufgetragen. Die Filme wurden 24 h bei 60°C getrocknet.

Die Filmeigenschaften sind in der Tabelle 7 zusammengefaßt.

Tabelle 7

| Herstellung der Klarlackfilme | | | | | |
|---|---|---|---|---|---|
| Vernetzung | unvernetzt | | vernetzt | | |
| Produkt | Ic | Ip | Ii | Ip | DIN |
| Verhältnis NCO- zu NH und OH-Gruppen | 0 | 0 | 1,25 | 1,25 | |
| E-Modul [N/mm$^2$] | 1350 | 1300 | 1950 | 1425 | DIN 53 457 |
| Reißkraft [N/mm$^2$] | 52 | 40 | 65 | 51 | DIN 53 504 |
| Dehnung [%] | 5 | 4 | 5 | 5 | DIN 53 457 |
| Pendelhärte [s] | 218 | 210 | 220 | 211 | DIN 53 157 |

Messung der Vernetzunggeschwindigkeit von Polymer I mit mehrwertigen Isocyanaten

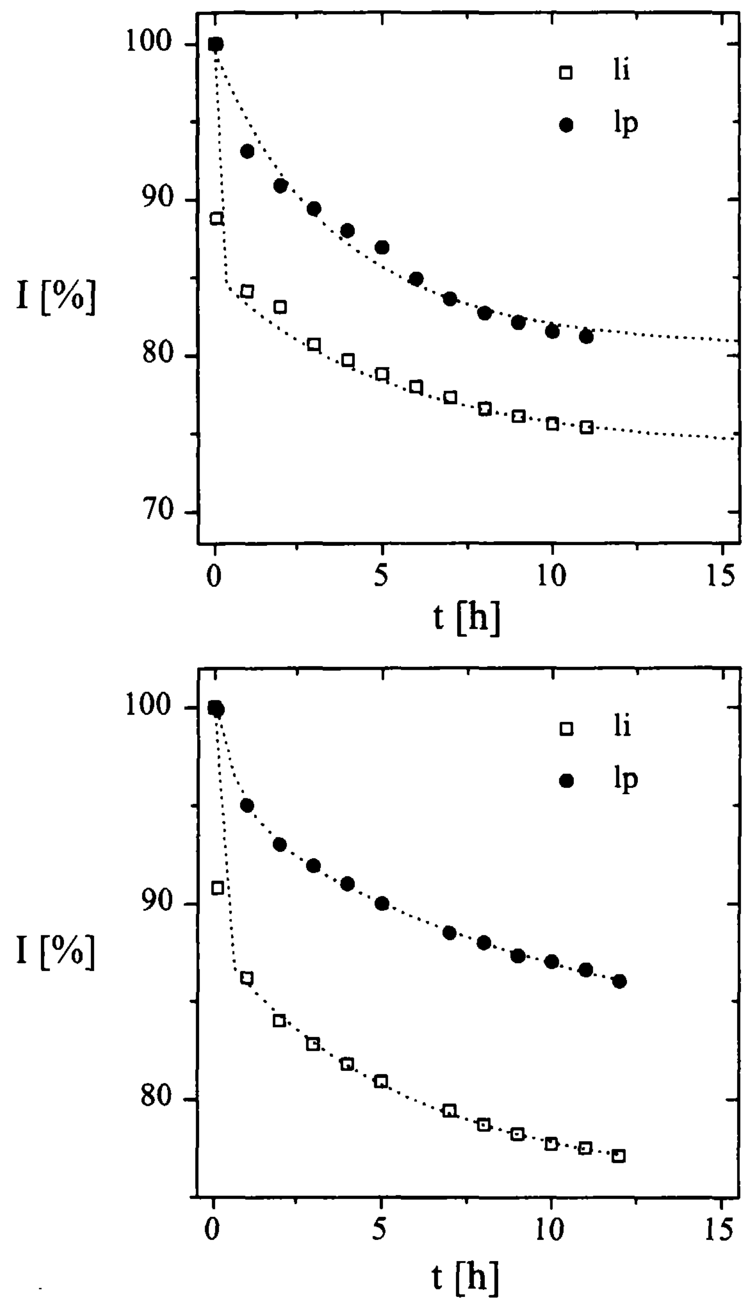


Abb. 1: IR-spektroskopische Bestimmung der Abnahme der NCO-Gehalte I in Klarlackfilmen bei RT,

$$I = 1 - \frac{\int_{2009\ cm^{-1}}^{2475\ cm^{-1}} D d\tilde{v}(t)}{\int_{2009\ cm^{-1}}^{2475\ cm^{-1}} D d\tilde{v}(t=0)}$$

I = Abnahme der NCO-Gehalte; D = Durchlässigkeit, $\tau$ = Wellenzahl, t = Zeit

## Patentansprüche

1. Als Beschichtungsmittel oder Komponenten hierfür geeignete Polyurethane I, erhältlich durch Umsetzung von

   1) einem Isocyanat II, ausgewählt aus der Gruppe der

      a) Präpolymeren, erhältlich durch Umsetzung von

      a1) einem mehrwertigen Alkohol III, der pro Molekül von III mehr als eine gegenüber Isocyanaten reaktive Hydroxylgruppe aufweist,
      mit

      a2) einem aromatischen oder aliphatischen, mehrwertigen Isocyanat IV,
      wobei das Verhältnis der Zahl der gegenüber Isocyanaten reaktiven Hydroxylgruppen von III zu der Zahl der Isocyanatgruppen in IV kleiner als 1 ist,
      und

      b) aromatischen oder aliphatischen, mehrwertigen Isocyanate IV

   mit

   2) einer als Kettenverlängerer geeigneten Verbindung V, erhältlich durch

      a) Umsetzung von einem mehrwertigen Alkohol VI
      mit

      b1) einer Verbindung VII, die eine Epoxyfunktion und zusätzlich eine gegenüber Alkoholen reaktive funktionelle Gruppe enthält, zu einer Verbindung VIII und Umsetzung einer Verbindung VIII mit einer $\alpha,\beta$-olefinisch ungesättigten Carbonsäure IX zu einer Verbindung X
      Zeichn.
      oder

      b2) einer $\alpha,\beta$-olefinisch ungesättigten Carbonsäure IX zu einer Verbindung X
      und

      c) Umsetzung einer Verbindung X mit einem Amin XI, das mindestens eine gegenüber der $\alpha,\beta$-Mehrfachbindung von IX reaktive primäre Aminogruppe aufweist,

   wobei die Summe der Zahl der gegenüber Isocyanatgruppen reaktiven Aminogruppen und Hydroxylgruppen der Verbindung V größer als die Zahl der Isocyanatgruppen der Verbindung II ist.

2. Polyurethan I nach Anspruch 1, erhältlich aus einem Alkohol, der zwei oder drei gegenüber Isocyanaten reaktive Hydroxylgruppen aufweist, als Verbindung III.

3. Polyurethan I nach Anspruch 1 oder 2, erhältlich aus einem hydroxylgruppenhaltigen Polyester oder Polyether als Verbindung III.

4. Polyurethan I nach den Ansprüchen 1 bis 3, erhältlich aus einem Alkohol mit einem mittleren durchschnittlichen Molekulargewicht (Zahlenmittel) von 62 bis 5000 als Verbindung III.

5. Polyurethan I nach den Ansprüchen 1 bis 4, erhältlich aus einem aromatischen oder aliphatischen Diisocyanat als Verbindung IV.

6. Polyurethan I nach den Ansprüchen 1 bis 5, erhältlich aus einem zweiwertigen Alkohol VI.

7. Polyurethan I nach den Ansprüchen 1 bis 6, erhältlich aus 1,4-Butandiol, 1,6-Hexandiol, Bisphenol A, 2,2-Dimethyl-1,3-propandiol, oder 1,4-Bis(hydroxymethyl)cyclohexan als Verbindung VI.

8. Polyurethan I nach den Ansprüchen 1 bis 7, erhältlich aus (+)-1-Chloro-2,3-epoxy-propan, (-)-1-Chloro-2,3-epoxy-propan, (+)-1-Chloro-2,3-epoxy-2-methyl-propan oder (-)-1-Chloro-2,3-epoxy-2-methyl-propan als Verbindung VII.

9. Polyurethan I nach den Ansprüchen 1 bis 8, erhältlich aus Acrylsäure oder Methacrylsäure als Verbindung IX.

10. Polyurethan I nach den Ansprüchen 1 bis 9, erhältlich aus Ethanolamin, 2-Aminopropan-1-ol, 1-Aminopropan-2-ol, 2-Aminobutan-1-ol, 2,2-Dimethyl-5-aminopentanol, 2-(Aminoethyl)diethanolamin oder 3,5,5-Trimethyl-3-aminomethyl-cyclohexanol als Amin XI.

11. Polyurethan I nach den Ansprüchen 1 bis 10 mit sauren oder basischen Gruppen oder deren Salzen.

12. Polyurethan I nach den Ansprüchen 1 bis 11 mit einer Sulfonsäure-, Phosphonsäure-, Carbonsäure-, tert. Amino-, Sulfonat-, Phosphonat-, Carboxylat- oder Ammoniumgruppe als saure oder basische Gruppe.

13. Verfahren zur Herstellung von Polyurethanen I gemäß den Ansprüchen 1 bis 12, dadurch gekennzeichnet, daß man

1) ein Isocyanat II, ausgewählt aus der Gruppe der

a) Präpolymeren, erhältlich durch Umsetzung von

a1) einem mehrwertigen Alkohol III, der pro Molekül von III mehr als eine gegenüber Isocyanaten reaktive Hydroxylgruppe aufweist,
mit

a2) einem aromatischen oder aliphatischen, mehrwertigen Isocyanat IV,
wobei das Verhältnis der Zahl der gegenüber Isocyanaten reaktiven Hydroxylgruppen von III zu der Zahl der Isocyanatgruppen in IV kleiner als 1 ist,
und

b) aromatischen oder aliphatischen, mehrwertigen Isocyanate IV

mit

2) einer als Kettenverlängerer geeigneten Verbindung V, erhältlich durch

a) Umsetzung von einem mehrwertigen Alkohol VI
mit

b1) einer Verbindung VII, die eine Epoxyfunktion und zusätzlich eine gegenüber Alkoholen reaktive funktionelle Gruppe enthält, zu einer Verbindung VIII und Umsetzung einer Verbindung VIII mit einer $\alpha,\beta$-olefinisch ungesättigten Carbonsäure IX zu einer Verbindung X
oder

b2) einer $\alpha,\beta$-olefinisch ungesättigten Carbonsäure IX zu einer Verbindung X
und

c) Umsetzung einer Verbindung X mit einem Amin XI, das mindestens eine gegenüber der $\alpha,\beta$-Mehrfachbindung von IX reaktive primäre Aminogruppe aufweist,

wobei die Summe der Zahl der gegenüber Isocyanatgruppen reaktiven Aminogruppen und Hydroxylgruppen der Verbindung V größer als die Zahl der Isocyanatgruppen der Verbindung II ist, umsetzt.

14. Verwendung von Polyurethanen I gemäß den Ansprüchen 1 bis 13 als Beschichtungsmittel oder Komponente hierfür.

15. Verwendung von Polyurethanen I gemäß den Ansprüchen 1 bis 13 als Bindemittel oder Bindemittelkomponente für pigmenthaltige Beschichtungen.

16. Durch Vernetzung härtbares Bindemittelsystem aus einem Polyurethan I gemäß den Ansprüchen 1 bis 13 und einem mehrwertigen Isocyanat XII, wobei die Menge an XII so bemessen ist, daß die Anzahl der Isocyanatgruppen in XII zur Anzahl der gegenüber Isocyanaten reaktiven Gruppen in I 0,1 bis 2,0 beträgt.

17. Beschichtete Gegenstände, erhältlich durch Aufbringen einer Schicht enthaltend ein Bindemittelsystem gemäß Anspruch 16 und anschließende Vernetzung.

Europäisches Patentamt

# EUROPÄISCHER RECHERCHENBERICHT

Nummer der Anmeldung
EP 97 10 9549

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US RE31022 E (S.L.BUCHWALTER ET AL.) 31.August 1982<br>* Ansprüche 1-3,8,9 *<br>* Spalte 3, Zeile 5 - Spalte 4, Zeile 15 *<br>* Spalte 4, Zeile 45 - Zeile 62 *<br>* Spalte 6, Zeile 26 - Zeile 32 *<br>* Spalte 7, Zeile 6 - Zeile 53 *<br>--- | 1-17 | C08G18/38<br>C08G18/10<br>C08G18/67<br>C09D175/04 |
| A | GB 979 667 A (SHELL) 6.Januar 1965<br>* Ansprüche 1,6-15 *<br>----- | 1 | |

RECHERCHIERTE SACHGEBIETE (Int.Cl.6)
C08G

Der vorliegende Recherchenbericht wurde für alle Patentansprüche erstellt

| Recherchenort | Abschlußdatum der Recherche | Prüfer |
|---|---|---|
| DEN HAAG | 13.Oktober 1997 | Van Puymbroeck, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)